# EUROPÄISCHE PATENTSCHRIFT

(11) **EP 1 046 215 B1**
(45) Veröffentlichungstag und Bekanntmachung des Hinweises auf die Patenterteilung: **13.12.2006**
(21) Anmeldenummer: 99950472.3
(22) Anmeldetag: 30.07.1999
(51) Int. Cl.: H02K 7/08, F04D 29/04, F04D 29/26

(54) **ELEKTROMOTOR-LÜFTERRAD-KOMBINATION UND VERFAHREN ZU DEREN HERSTELLUNG**
ELECTRIC MOTOR FAN WHEEL COMBINATION AND METHOD FOR THE PRODUCTION THEREOF
COMBINAISON MOTEUR ELECTRIQUE-ROTOR ET SON PROCEDE DE PRODUCTION

(30) Priorität: 12.10.1998 DE 19846919
(43) Veröffentlichungstag der Anmeldung: 25.10.2000
(73) Patentinhaber: ROBERT BOSCH GMBH, 70442 Stuttgart (DE)
(72) Erfinder: SCHULER, Dieter, D-77815 Bühl (DE); KÜNZEL, Gerald, D-77815 Bühl (DE)
(86) Internationale Anmeldenummer: PCT/DE1999/002349
(87) Internationale Veröffentlichungsnummer: WO 2000/022717

(56) Entgegenhaltungen:
- EP-A- 0 757 181
- DE-A- 19 606 146
- DE-U- 9 014 322
- FR-A- 1 129 253
- FR-A- 2 486 324
- US-A- 3 240 517
- US-A- 3 624 434
- PATENT ABSTRACTS OF JAPAN vol. 1995, no. 11, 26. Dezember 1995 (1995-12-26) & JP 07 231609 A (MATSUSHITA ELECTRIC IND CO LTD), 29. August 1995 (1995-08-29)

## Beschreibung

### Stand der Technik

Die Erfindung geht aus von einer Elektromotor-Lüfterrad-Kombination nach der Gattung des Patentanspruchs 1.

Die US-Patentschrift 3.264.506 offenbart eine Elektromotor-Lüfterrad-Kombination mit einem Gehäuse, mit einem Anker und einem Kollektor im Gehäuse, mit zwei Gleitlagern im Gehäuse, mit einer mittels den Gleitlagern gelagerten und den Anker und den Kollektor tragenden Ankerwelle, die ein aus dem Gehäuse herausragendes Ankerwellenende aufweist, und mit einem Lüfterrad, das eine Nabe aufweist, die auf dem Ankerwellenende befestigt ist. Dabei weisen beide Gleitlager kippbeweglich angeordnete Gleitlagerbuchsen mit stirnseitigen Lagerflächen auf, so daß die Gleitlagerbuchsen zusammen mit der Ankerwelle zwei Radiallager und daß zu dem Anker und dem Kollektor gerichtete stirnseitige Lagerflächen der beiden Gleitlagerbuchsen zusammen mit zwischen diese und dem Anker und dem Kollektor eingebauten und die Ankerwelle umgebenden Ringscheiben zusätzlich zwei Axiallager bilden. Diese Axiallager begrenzen die Verschiebbarkeit der Ankerwelle in axialer Richtung. Damit das Axialspiel auf eine Größe von beispielsweise im wesentlichen 0,125 mm einstellbar ist, besteht das Gehäuse des Elektromotors aus zwei im wesentlichen topfartigen Gehäuseteilen, von denen das eine teleskopartig in das andere einschiebbar ist zum Verringern des ursprünglich zu großen Ankerlängsspieles auf den gewünschten Wert, der weniger Geräuscherzeugurig im Betrieb des Elektromotors erwarten läßt. Nach dem Einstellen des Axialspiels auf den gewollten Wert werden an den beiden Gehäuseteilen Schweißnähte angebracht, so daß die gegenseitige Ausrichtung der Gehäuseteile und damit das eingestellte Axialspiel erhalten bleiben. In diesem Zustand hat die Nabe des Lüfterrades einen axialen Abstand von einer benachbarten Lagerbuchse. Die Ringscheiben sind beispielsweise aus Stahlblech hergestellt und am Umfang tellerrandartig ausgebildet, so daß sie zusätzlich zur Bereitstellung von Axiallagergleitflächen auch als Schleuderringe für Öl dienen, mit dem die porös ausgebildeten Gleitlagerschalen getränkt sind.

Die US-Patentschrift 3.624.434 offenbart einen Elektromotor, der beispielsweise zur Kombination mit dem Lüfterrad gemäß der bereits genannten US-Patentschrift 3.264.506 vorgesehen ist. Dieser Elektromotor hat ein Gehäuse, einen Anker, einen Kollektor und zwei Gleitlager im Gehäuse, eine mittels den Gleitlagern gelagerte und den Anker sowie den Kollektor tragende Ankerwelle, die ein aus dem Gehäuse herausragendes Ankerwellenende aufweist, auf dem eine Nabe eines Lüfterrades befestigt wird, wobei beide Gleitlager die Ankerwelle aufnehmende Gleitlagerbuchsen mit stirnseitigen Lagerflächen aufweisen und beide stirnseitigen Lagerflächen einer der Gleitlagerbuchsen zusammen mit einer zwischen dem Kollektor und dieser Gleitlagerbuchse um die Ankerwelle angeordneten Ringscheibe und mit einem jenseits der Ringscheibe auf einem durch die Gleitlagerbuchse hindurchgesteckten, freien Ende der Ankerwelle aufgepreßten axialen Anschlagring ein in zwei Richtungen wirkendes Axiallager für die Ankerwelle bildet. Hierdurch ist das aus der Ringscheibe und dem axialen Anschlagring und der dazwischen befindlichen Gleitbuchse gebildete Gleitlager gemäß dem deutschen Sprachgebrauch ein sogenanntes Festlager, wogegen das andere Gleitlager, an das das für das Lüfterrad bestimmte Ankerwellenende sich anschließt, nach deutschem Sprachgebrauch ein sogenanntes Loslager ist. Damit ist gemeint, daß dieses Loslager lediglich radiale Lagerkräfte erzeugt und einer Verschiebung der Ankerwelle keinen Widerstand entgegensetzt, also in axialer Richtung die Ankerwelle lose aufnimmt. Die Ringscheibe als Bestandteil des Axiallagers ist aus Blech geformt und hat einen Rand ähnlich einem Teller, so daß die Ringscheibe zusätzlich zum Bereitstellen einer axialen Lagerfläche auch als Ölschleuderring dient zur Vermeidung des Wanderns von Öl aus der porös ausgebildeten Gleitlagerbuchse hin zu dem Kollektor.

### Vorteile der Erfindung

Die erfindungsgemäße Elektromotor-Lüfterrad-Kombination mit den kennzeichnenden Merkmalen des Anspruches 1 ist preisgünstig, weil eine ohnehin notwendige Nabe des Lüftrades die Aufgabe des axialen Anschlagringes gemäß dem Stand der Technik für die Bildung eines Axiallagers einspart. Deshalb wird ein im Gehäuse des Elektromotors des Standes der Technik für den axialen Anschlagring vorgesehener Einbauraum eingespart.

Durch die in den weiteren Ansprüchen aufgeführten Maßnahmen sind vorteilhafte Ausgestaltungen der im Patentanspruch 1 angegebenen Elektromotor-Lüfterrad-Kombination möglich.

Das kennzeichnende Merkmal des Anspruches 2 ergibt den Vorteil einer elastischen und dadurch geräuschmindernden Begrenzung der Verschiebbarkeit der Ankerwelle relativ zu dem Gehäuse des Elektromotors. Demgemäß ist hartes Anschlagen der Nabe des Lüfterrades an der Gleitlagerbuchse und dadurch das Abstrahlen von störendem Klack-Geräusch durch das Gehäuse des Elektromotors oder das Lüfterrad vermieden.

Das kennzeichnende Merkmal des Anspruches 3 gibt ein preisgünstig herstellbares Ausführungsbeispiel an.

Die kennzeichnenden Merkmale der Ansprüche 4 und 5 sind alternativ anwendbar und bieten den Vorteil einer erleichterten Montage der Nabe des Lüfterrades auf dem Ankerwellenende dadurch, daß eine dem Anspruch 3 gemäße Preßpassung weniger stramm ausbildbar ist. Für die Ausbildungsbeispiele der Ansprüche 4 und 5 genügt eine Schiebesitzpassung zur Anordnung der jeweiligen Nabe auf dem Ankerwellenende.

Das Verfahren mit den kennzeichnenden Merkmalen des Anspruches 6 ergibt den Vorteil, daß zum Einstellen des Axialspiels keine Fühlerlehre zwischen die Gleitlagerbuchse und die Nabe des Lüfterrades einzuführen ist. Dadurch kann, von der Nabe ausgehend ein eine Anzahl Lüfterschaufeln tragender Tragkörper schalenartig und dabei den Elektromotor auf einem Teil seiner Länge,umgebend ausgebildet werden.

Das Verfahren mit den kennzeichnenden Merkmalen des Anspruches 7 wird angewandt zur Herstellung der Elektromotor-Lüfterrad-Kombination gemäß dem Anspruch 3.

### Zeichnung

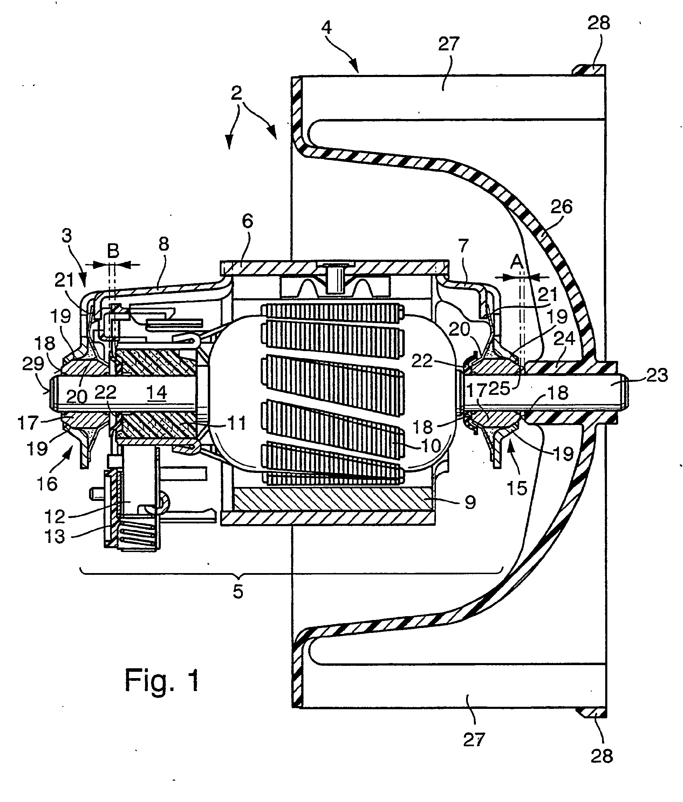

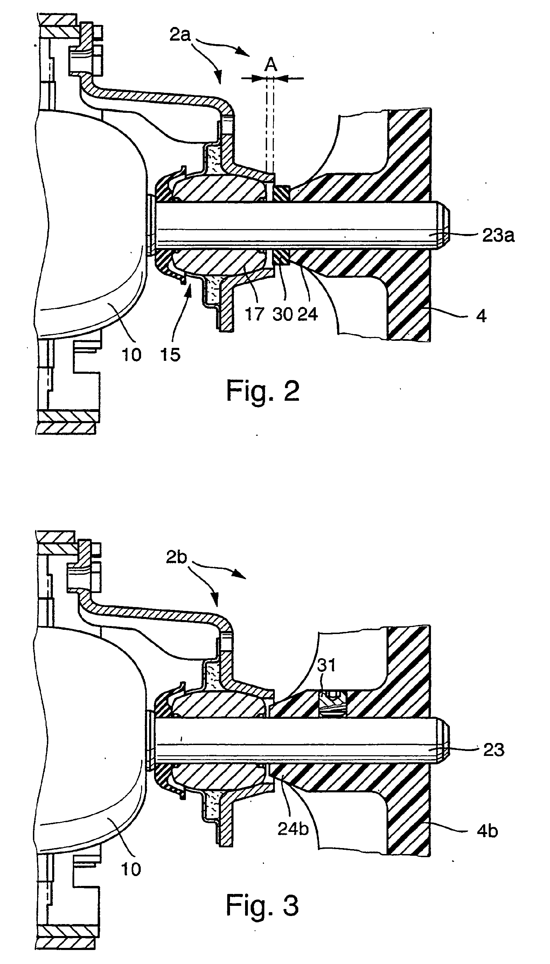

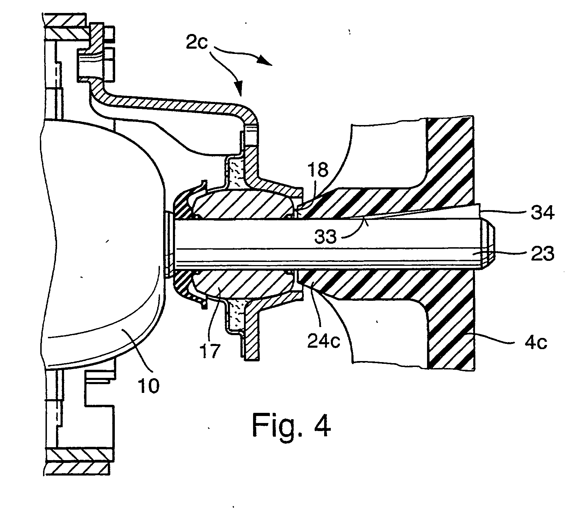

Vier Ausführungsbeispiele der erfindungsgemäßen Elektromotor-Lüfter-Kombination sind in der Zeichnung dargestellt und in der nachfolgenden Beschreibung näher erläutert. Es zeigen Figur 1 ein erstes Ausführungsbeispiel der erfindungsgemäßen Elektromotor-Lüfterrad-Kombination im Längsschnitt, Figur 2 eine Weiterbildung des Ausführungsbeispiels der Figur 1, Figur 3 ein drittes Ausführungsbeispiel und Figur 4 ein viertes Ausführungsbeispiel einer erfindungsgemäßen Elektromotor-Lüfterrad-Kombination.

### Beschreibung der Ausführungsbeispiele

Das erste Ausführungsbeispiel einer Elektromotor-Lüfterrad-Kombination 2 gemäß der Figur 1 besteht aus einem Elektromotor 3 und einem von diesem antreibbaren Lüfterrad 4.

Der Elektromotor 3 besitzt ein Gehäuse 5, das aus einem rohrartigen Rückschlußkörper 6 und daran angesetzten, im wesentlichen topfartigen Gehäuseteilen 7 und 8 besteht, wenigstens einen in dem Rückschlußkörper 6 angeordneten Permanentmagnet 9, einen Anker 10 mit zugeordnetem Kollektor 11, wenigstens eine Kohlebürste 12 und Kohlebürstenführungsmittel 13, eine Ankerwelle 14 und zwei die Ankerwelle 14 aufnehmende Gleitlager 15, 16. Im Ausführungsbeispiel weisen die Gleitlager 16 Gleitlagerbuchsen 17 auf, die stirnseitig Lagerflächen 18 aufweisen, die vorzugsweise eben ausgebildet sind und dadurch kreisringartig verlaufen. Außen weisen die Gleitlagerbuchsen in an sich bekannter Weise kalottenartig geformte Zonen 19 auf zur kippbeweglichen Aufnahme in den Gehäuseteilen 7 und 8. Zu diesem Zweck weisen die Gehäuseteile 7 und 8 trichterähnliche Ausformungen 19 auf, gegen die die Gleitlagerbuchsen 17 angedrückt sind mittels Federzungen 20, die von Spannbrillen 21 ausgehen.

Zwischen dem Kollektor 11 und dem Gleitlager 16 bzw. deren Gleitlagerbuchse 17 ist ein Element 22 eingefügt, das nach Art einer Ringscheibe die Ankerwelle 14 umgibt und im Bereich seines äußeren Randes tellerartig geformt ist, um als Ölschleuderring zu dienen, für solches Öl, das gegebenenfalls aus der Gleitlagerbuchse 17 heraus entlang der Ankerwelle kriecht und vom Kollektor 11 fernzuhalten ist. Ein baugleiches Element 22 ist auch eingefügt zwischen den Anker 10 und die Gleitlagerbuchse 17 des Gleitlagers 15. Hier dient das Element 22 als eine mit einer stirnseitigen Lagerfläche 18 der Gleitlagerbuchse 17 zusammen arbeitende ringförmige Anlaufscheibe. Beispielsweise ist dieses Element 22 aus einem gummiartig elastischen Werkstoff, beispielsweise einem thermoplastischen Elastomer, hergestellt. Dadurch vermeidet das Element 22 das Entstehen von metallischen Aufschlaggeräuschen anläßlich unvermeidlicher Relativbewegungen des Ankers 10 in Richtung der im Gehäuseteil 7 gehaltenen Gleitlagerbuchse 17.

Die Ankerwelle 14 hat ein Ankerwellenende 23, das durch die Gleitlagerbuchse 17 hindurch aus dem Gehäuseteil 7 herausragt, zum Tragen und Antreiben des Lüfterrades 4. Hierfür besitzt das Lüfterrad 4 eine das Ankerwellenende 23 umfassende Nabe 24, die im ersten Ausführungsbeispiel auf das Ankerwellenende 23 aufgepreßt ist. Dadurch ist die Nabe 24 relativ zum Ankerwellenende 23 sowohl in axialer als auch in Umfangsrichtung ausreichend befestigt. Zur benachbarten Lagerfläche 18 der Gleitlagerbuchse 17 hin hat die Nabe 24 eine axiale Anschlagfläche 25. Das hier als Anlaufscheibe dienende Element 22 ist in irgendeiner, beispielsweise zum Stand der Technik gehörenden Weise mittelbar in axialer Richtung relativ zum Anker 18 abgestützt. In der Figur 1 ist das Element 22 an einer Lagerfläche 18 der in dem Gehäuseteil 7 befindlichen Gleitlagerbuchse 17 anliegend dargestellt, wogegen zwischen der anderen Lagerfläche 18, die zu dieser Gleitlagerbuchse 17 gehört, und der axialen Anschlagfläche 25 der Nabe 24 ein axialer Abstand A dargestellt ist. Dieser axiale Abstand A ist einstellbar durch axiale Ausrichtung der Nabe 24 relativ zu dem mittelbar am Anker 10 abgestützten Element 22. Dieses axiale Spiel A ist in der Figur 1 übertrieben groß dargestellt und wird in der Praxis beispielsweise auf 0,1 mm eingestellt.

Zwischen der Gleitlagerbuchse 17 im Gehäuseteil 8 und dem dort untergebrachten Element 22 ist ein Abstand B vorgesehen. Dieser Abstand·B ist gewollt größer als der beschriebene Abstand A. Dies hat zur Folge, daß die Ankerwelle in gewollter Weise innerhalb der vom Gehäuseteil 8 getragenen Gleitlagerbuchse 17 unbehindert längsverschieblich ist, wogegen die Verschieblichkeit der Ankerwelle 14 relativ zu der im Gehäuseteil 7 gehaltenen Gleitlagerbuchse 17 begrenzt ist auf das Maß des axialen Abstandes A. Dadurch ist das vom Gehäuseteil 7 getragene Gleitlager 15 sowohl ein Radialgleitlager als auch ein in zwei Richtungen wirkendes Axiallager und somit gemäß dem deutschen Sprachgebrauch ein sogenanntes Festlager. Im Unterschied dazu ist das andere Gleitlager 16, so wie dies bereits durch die an sich nicht begrenzte Verschieblichkeit der Ankerwelle 14 angedeutet ist, ein sogenanntes Loslager.

An die Nabe 24 des Lüfterrades 4 schließt sich eine im ersten Ausführungsbeispiel Beispiel im wesentlichen schüsselartig ausgebildete Radscheibe 26 an, die an ihrem Umfang Lüfterradschaufeln 27 trägt. Diese sind vereinfacht dargestellt und werden in axialem Abstand von der Radscheibe 26 relativ zueinander fixiert mittels eines Ringes 28. Die Nabe 24, die Radscheibe 26, die Lüfterradschaufeln 27 und der Ring 28 sind im Beispiel als integrales Bauteil aus einem thermoplastischen Werkstoff gespritzt. Jedoch steht es einem Konstrukteur frei, das Lüfterrad 4 zumindest teilweise aus einem metallischen Werkstoff herzustellen. Beispielsweise kann auch das Lüfterrad 4 gemäß der US-Patentschrift 3,264,506 auf dem Ankerwellenende 23 befestigt werden.

Wenn, wie im dargestellten Beispiel gemäß der Figur 1, die schüsselartig ausgebildete Radscheibe 26 den Zugang zu dem mit A bezeichneten Axialspiel zwischen der Gleitlagerbuchse 17 und der axialen Anschlagfläche 25 der Nabe 24 erschwert oder verhindert, wird das Axialspiel A gemäß dem folgend beschriebenen Verfahren eingestellt:
Eine beim Gehäuseteil 8 befindliche Stirnseite 29 der Ankerwelle 14 wird nach dem Zusammenbau des Elektromotors 3 in einer nicht dargestellten Weise abgestützt. Dann wird gegen die nicht dargestellte Abstützung die Nabe 24 in Ausrichtung zum Ankerwellenende 23 gebracht und entlang diesem auf die Ankerwelle 14 aufgepreßt unter Belassung eines axialen Abstandes zwischen der axialen
Anschlagfläche 25 und der zugeordneten Gleitlagerbuchse 17, wobei dieser axiale Abstand mit Sicherheit größer als der einzustellende axiale Abstand A ist. Dann wird beispielsweise das Gehäuse 5 des Elektromotors 3 relativ zu der Ankerwelle 14 verschoben und dabei die Größe des Verschiebeweges gemessen, beispielsweise unter Berücksichtigung einer dabei stattfindenden elastischen Zusammendrückung des Elementes 22, das dem Gleitlager 15 zugeordnet ist. Von dem dabei ermittelten Verschiebemaß wird ein Wert in der Größe des gewollten Axialspieles A abgezogen, wonach das erhaltene Ergebnis ein Verschiebemaß angibt für eine weitere Verschiebung der Nabe 24 relativ zu dem Anker 10 mittels einer Presse. Dieses Verfahren ist beispielsweise von Hand oder maschinell durchführbar. Im letzteren Fall braucht man eine Steuerung für die Presse, die ihre Vorgaben aus einer automatischen Verschiebewegmeßeinrichtung erhält.

Das zweite Ausführungsbeispiel einer Elektromotor-Lüfterrad-Kombination 2a gemäß der Figur 2 unterscheidet sich vom Ausführungsbeispiel gemäß der Figur 1 dadurch, daß zwischen die Nabe 24 des Lüfterrades 4 und die benachbarte Gleitlagerbuchse 17 des Gleitlagers 15 ein Pufferring 30 eingefügt ist. Dieser Pufferring 30 ist beispielsweise wie das Element 22 aus einem gummiartig elastischen Werkstoff wie thermoplastischem Elastomer hergestellt und wirkt, wie dies der Name ausdrückt, als Pufferelement einerseits und andererseits aber auch als eine ringartige Anlaufscheibe, damit das Gleitlager 15 wie im Beispiel der Figur 1 auch als ein Axiallager wirkt. Wiederum ist ein Axialspiel A dieses Gleitlagers 15 übertrieben groß dargestellt zwischen der Gleitlagerbuchse 17 und dem Pufferring 30. Das Axialspiel A ist deshalb an dieser Stelle eingezeichnet, weil durch die im beschriebenen Verfahren genannte Relativverschiebung des Gehäuses 5 relativ zur Ankerwelle 14 und damit dem Anker 10 dann, wenn der Pufferring 30 mit radialer Spannung das Ankerwellenende 23 A umschließt, dazu neigt, an der Nabe 24 zu verbleiben. Erkennbar ist, daß durch Anordnung des Pufferringes 30 direkter mechanischer Kontakt zwischen der normalerweise aus Metall gefertigten Gleitlagerbuchse 17 und der aus relativ hartem Kunststoff oder Metall hergestellten Nabe 24 des Lüfterrades 4 vermieden wird. Die Verhinderung eines harten mechanischen Kontaktes mittels des Pufferringes 30 ist also eine geräuschmindernde Maßnahme.

Das dritte Ausführungsbeispiel einer Elektromotor-Lüfterrad-Kombination 2b gemäß der Figur 3 unterscheidet sich vom ersten Ausführungsbeispiel gemäß der Figur 1 dadurch, daß eine Nabe 24 b eines Lüfterrades 4b ausgestaltet ist zur Aufnahme wenigstens einer Klemmschraube 31. Beispielsweise hat diese Klemmschraube 31 einen an sich bekannten Innensechskant 32, ist kopflos und hat deshalb die Form eines sogenannten Gewindestiftes. Eine solche Klemmschraube 31 kann als ein zusätzliches Befestigungsmittel zu dem voranstehend beschriebenen Preßsitz der Nabe 24 auf dem Ankerwellenende 23 des voranstehend beschriebenen Ausführungsbeispiels angeordnet werden. Andererseits kann aber auch Dank der Anordnung der wenigstens einen Klemmschraube 31 ein weniger strammer Preßsitz oder aber eine Übergangspassung bis hin zu einem Schiebesitz vorgesehen werden. Dies erleichtert das Einstellen der Nabe 24b relativ zum Anker 10.

Das vierte Ausführungsbeispiel einer Elektromotor-Lüfterrad-Kombination 2c gemäß der Figur 4 unterscheidet sich vom dritten Ausführungsbeispiel gemäß der Figur 3 dadurch, daß eine Nabe 24c eines Lüfterrades 4c eine zum Ankerwellenende 23 geneigte Nut 33 aufweist, in die ein Keil 34 eintreibbar ist. Dadurch kann auf eine stramme Preßpassung des ersten Ausführungsbeispiels verzichtet werden. Beispielsweise kann für das Ausrichten der Nabe 24c auf dem Ankerwellenende 23 eine Schiebepassung vorgesehen werden und ein für das Einstellen von Axialspiel A vorteilhafter Verschiebewiderstand kann mittels des Keils 34 durch Verschieben in der Nut 33 erzeugt werden.

Aus der Beschreibung der Unterschiede bezüglich der Befestigungen der unterschiedlichen Naben 24, 24b und 24c auf dem jeweiligen Ankerwellenende 23 geht hervor, daß der Gedanke, unter Zuhilfenahme einer axialen Anschlagfläche, die sich an einer Nabe eines Lüfterrades befindet, ein Axiallager mit einstellbarem Axialspiel A zu schaffen unabhängig davon ist, in welcher Weise letztlich die betreffende Nabe betriebssicher auf dem zugeordneten Ankerwellenende befestigt wird. Beispielsweise könnte man, wenn eine solche Nabe aus Stahl besteht, eine Sicherung per Schweißnahtanordnung vornehmen.

Das voranstehend beschriebene Verwenden einer Nabe eines Lüfterrades als ein Bestandteil eines Axiallagers, das eine Gleitlagerbuchse 17 mit stirnseitigen Lagerflächen 18 aufweist, ist nicht gebunden an die in der Figur 1 dargestellte Anordnung eines Kollektors 11. Vielmehr kann ein Axiallager der beschriebenen Art auch verwendet werden bei einem andersartig gestaltetem Elektromotor einer Elektromotor-Lüfterrad-Kombination.

## Patentansprüche

1. Elektromotor-Lüfterrad-Kombination (2) mit einem Gehäuse (5), mit einem Anker (10) im Gehäuse, mit zwei Gleitlagern (15, 16) im Gehäuse, mit einer mittels den Gleitlagern gelagerten und den Anker tragenden Ankerwelle (14), die ein aus dem Gehäuse herausragendes Ankerwellenende (23) aufweist, und mit einem Lüfterrad (4), das eine Nabe (24) aufweist, die auf dem Ankerwellenende befestigt ist, wobei beide Gleitlager (15, 16) die Ankerwelle (14) aufnehmende Gleitlagerbuchsen (17) mit stirnseitigen Lagerflächen (18) aufweisen und beide stirnseitigen Lagerflächen einer der Gleitlagerbuchsen zusammen mit einem zwischen dem Anker (10) und dieser Gleitlagerbuchse um die Ankerwelle angeordneten ringscheibenartigen Element (22) und einem zur gegenüberliegenden stirnseitigen Lagerfläche dieser Gleitlagerbuchse (17) ausgerichteten und auf der Ankerwelle befestigten Axialanschlag ein in zwei Richtungen wirkendes Axiallager bilden, **dadurch gekennzeichnet, daß** die Nabe (24, 24b, 24c) des Lüfterrades (4, 4b, 4c) den axialen Anschlag (25) des Axiallagers (15; 17, 22, 23, 24) bildet.

2. Elektromotor-Lüfterrad-Kombination nach Anspruch 1, **dadurch gekennzeichnet, daß** zwischen die Nabe (24) des Lüfterrades (4) und eine stirnseitige Lagerfläche (18) der Gleitlagerbuchse (17) des Gleitlagers (15) ein das Ankerwellenende (23) umgebender Pufferring (30) aus gummiartig elastischem Werkstoff eingebaut ist.

3. Elektromotor-Lüfterrad-Kombination nach Anspruch 1 oder 2, **dadurch gekennzeichnet, daß** die Nabe (24) des Lüfterrades (4) auf das Ankerwellenende (23, 23a) aufgepreßt ist.

4. Elektromotor-Lüfterrad-Kombination nach Anspruch 1 oder 2, **dadurch gekennzeichnet, daß** die Nabe (24b) des Lüfterrades (4b) mittels wenigstens einer Klemmschraube (31) auf dem Ankerwellenende (23) fixiert ist.

5. Elektromotor-Lüfterrad-Kombination nach Anspruch 1 oder 2, **dadurch gekennzeichnet, daß** die Nabe (24c) des Lüfterrades (4c) mittels eines Keils (34) auf dem Ankerwellenende (23) fixiert ist.

6. Verfahren zum Herstellen einer Elektromotor-Lüfterrad-Kombination (2) mit einem Gehäuse (5), mit einem Anker (10) im Gehäuse, mit zwei Gleitlagern (15, 16) im Gehäuse, mit einer mittels den Gleitlagern gelagerten und den Anker tragenden Ankerwelle (14), die ein aus dem Gehäuse herausragendes Ankerwellenende (23) aufweist, und mit einem Lüfterrad (4), das eine Nabe (24) aufweist, die auf dem Ankerwellenende befestigt ist, wobei beide Gleitlager (15, 16) die Ankerwelle aufnehmende Gleitlagerbuchsen (17) mit stirnseitigen Lagerflächen aufweisen und beide stirnseitigen Lagerflächen (18) einer der beiden Gleitlagerbuchsen zusammen mit einem zwischen dem Anker und dieser Gleitlagerbuchse um die Ankerwelle angeordneten ringscheibenartigen Element (22) mit einem zur gegenüberliegenden stirnseitigen Lagerfläche (18) dieser Gleitlagerbuchse ausgerichteten axialen Anschlag ein in zwei Richtungen wirkendes Axiallager bilden, wobei die Nabe (24) des Lüfterrades (4) mit einem gegen die eine Lagerfläche der Gleitlagerbuchse gerichteten Ende den axialen Anschlag bildet, **dadurch gekennzeichnet, daß** nach dem Zusammenbauen des Elektromotors (3) die Nabe (24, 24b, 24c) des Lüfterrades (4, 4b, 4c) auf das Ankerwellenende (23, 23a) geschoben wird unter Belassung eines Abstandes zur nächstgelegenen Lagerfläche (18) der nächstgelegenen Gleitlagerbuchse (17), daß die Ankerwelle (14) wenigstens einmal verschoben wird, daß der Verschiebeweg gemessen wird, daß von dem Meßwert des Verschiebeweges ein Wert in der Größe (A) des gewollten Axialspiels (A) subtrahiert wird und daß ausgehend von einem dieserart berechneten Wert eine Verschiebeeinrichtung gesteuert wird zum Verschieben der Nabe (24, 24b, 24c) auf dem Ankerwellenende (23, 23a) um einen dem berechneten Wert zugeordneten Verschiebungsweg in Richtung des Ankers (10).

7. Verfahren nach Anspruch 6, **dadurch gekennzeichnet, daß** als Verschiebeeinrichtung eine steuerbare Presse verwendet wird, die stirnseitig an der Nabe (24, 24b, 24c) angreifend in Richtung des Ankers (10) drückt, während die Ankerwelle (14) stirnseitig abgestützt ist.

## Claims

1. Electric motor/fan impeller combination (2) having a housing (5), having an armature (10) in the housing, having two plain bearings (15, 16) in the housing, having an armature shaft (14) which is mounted by means of the plain bearings and supports the armature and has an armature-shaft end (23) which protrudes from the housing, and having a fan impeller (4) which has a hub (24) which is secured on the armature-shaft end, with the two plain bearings (15, 16) having plain bearing bushes (17) which hold the armature shaft (14) and have end-face bearing areas (18), and the two end-face bearing areas of one of the plain bearing bushes together with an annular disc-like element (22), which is arranged around the armature shaft between the armature (10) and this plain bearing bush, and an axial stop, which is oriented towards the opposite end-face bearing area of this plain bearing bush (17) and is secured on the armature shaft, forming an axial bearing which acts in two directions, **characterized in that** the hub (24, 24b, 24c) of the fan impeller (4, 4b, 4c) forms the axial stop (25) of the axial bearing (15; 17, 22, 23, 24).

2. Electric motor/fan impeller combination according to Claim 1, **characterized in that** a buffer ring (30) which surrounds the armature-shaft end (23) and is composed of a rubbery elastic material is fitted between the hub (24) of the fan impeller (4) and an end-face bearing area (18) of the plain bearing bush (17) of the plain bearing (15).

3. Electric motor/fan impeller combination according to Claim 1 or 2, **characterized in that** the hub (24) of the fan impeller (4) is pressed onto the armature-shaft end (23, 23a).

4. Electric motor/fan impeller combination according to Claim 1 or 2, **characterized in that** the hub (24b) of the fan impeller (4b) is fixed on the armature-shaft end (23) by means of at least one clamping screw (31).

5. Electric motor/fan impeller combination according to Claim 1 or 2, **characterized in that** the hub (24c) of the fan impeller (4c) is fixed on the armature-shaft end (23) by means of a wedge (34).

6. Method for producing an electric motor/fan impeller combination (2) having a housing (5), having an armature (10) in the housing, having two plain bearings (15, 16) in the housing, having an armature shaft (14) which is mounted by means of the plain bearings and supports the armature and has an armature-shaft end (23) which protrudes from the housing, and having a fan impeller (4) which has a hub (24) which is secured on the armature-shaft end, with the two plain bearings (15, 16) having plain bearing bushes (17) which hold the armature shaft and have end-face bearing areas, and the two end-face bearing areas (18) of one of the two plain bearing bushes together with an annular disc-like element (22), which is arranged around the armature shaft between the armature and this plain bearing bush, with an axial stop, which is oriented towards the opposite end-face bearing area (18) of this plain bearing bush, forming an axial bearing which acts in two directions, with the hub (24) of the fan impeller (4) forming an axial stop with an end which is directed towards one bearing area of the plain bearing bush, **characterized in that**, after the electric motor (3) is assembled, the hub (24, 24b, 24c) of the fan impeller (4, 4b, 4c) is pushed onto the armature-shaft end (23, 23a) while leaving a space for the closest bearing area (18) of the closest plain bearing bush (17), **in that** the armature shaft (14) is moved at least once, **in that** the movement distance is measured, **in that** a value of the magnitude (A) of the desired axial play (A) is subtracted from the measured value of the movement distance, and **in that** a movement device is controlled on the basis of a calculated value of this type in order to move the hub (24, 24b, 24c) on the armature-shaft end (23, 23a) in the direction of the armature (10) by a movement distance which is associated with the calculated value.

7. Method according to Claim 6, **characterized in that** the movement device used is a controllable press which is pressed against the end face of the hub (24, 24b, 25c) such that it acts in the direction of the armature (10), while the end face of the armature shaft (14) is supported.

## Revendications

1. Ensemble moteur électrique-rotor de ventilateur (2) comportant un boîtier (5), un induit (10) logé dans le boîtier, deux paliers lisses (15, 16) dans le boîtier, un arbre d'induit (14) monté dans les paliers lisses et portant l'induit, cet arbre ayant une extrémité (23) dépassant du boîtier, ainsi qu'un rotor de ventilateur (4) muni d'un moyeu (24) fixé sur l'extrémité de l'arbre d'induit,
les deux paliers lisses (15, 16) portant l'arbre d'induit (14) ont des coussinets (17) avec des surfaces de palier (18), frontales, et les deux surfaces de palier, frontales de l'un des coussinets constituent un palier axial agissant dans deux directions avec un élément (22) en forme de disque annulaire installé autour de l'arbre d'induit entre l'induit (10) et ce coussinet, et une butée axiale alignée sur la surface de palier frontale, opposée de ce palier lisse (17) et fixée sur l'arbre d'induit,
**caractérisé en ce que**
le moyeu (24, 24b, 24c) du rotor de ventilateur (4, 4b, 4c) forme la butée axiale (25) du palier axial (15 ; 17, 22, 23, 24).

2. Ensemble moteur électrique-rotor de ventilateur selon la revendication 1,
**caractérisé en ce qu'**
une bague-tampon (30) en une matière élastique comme du caoutchouc est installée entre le moyeu (24) du rotor de ventilateur (4) et une surface de palier, frontale (18) du coussinet (17) du palier lisse (15).

3. Ensemble moteur électrique-rotor de ventilateur selon la revendication 1 ou 2,
**caractérisé en ce que**
le moyeu (24) du rotor de ventilateur (4) est emmanché de force sur l'extrémité (23, 23a) de l'arbre d'induit.

4. Ensemble moteur électrique-rotor de ventilateur selon la revendication 1 ou 2,
**caractérisé en ce que**
le moyeu (24b) du rotor de ventilateur (4b) est bloqué sur l'extrémité (23) de l'arbre d'induit à l'aide d'au moins une vis de serrage (31).

5. Ensemble moteur électrique-rotor de ventilateur selon la revendication 1 ou 2,
**caractérisé en ce que**
le moyeu (24c) du rotor de ventilateur (4c) est bloqué sur l'extrémité (23) de l'arbre d'induit à l'aide d'un coin (34).

6. Procédé de fabrication d'un ensemble moteur électrique-rotor de ventilateur (2) comportant un boîtier (5), un induit (10) logé dans le boîtier, deux paliers lisses (15, 16) dans le boîtier, un arbre d'induit (14) monté dans les paliers lisses et portant l'induit, cet arbre ayant une extrémité (23) dépassant du boîtier, ainsi qu'un rotor de ventilateur (4) muni d'un moyeu (24) fixé sur l'extrémité de l'arbre d'induit,
les deux paliers lisses (15, 16) portant l'arbre d'induit (14) ont des coussinets (17) avec des surfaces de palier (18), frontales, et les deux surfaces de palier, frontales de l'un des coussinets constituent un palier axial agissant dans deux directions avec un élément (22) en forme de disque annulaire installé autour de l'arbre d'induit entre l'induit (10) et ce coussinet, et une butée axiale alignée sur la surface de palier frontale, opposée de ce palier lisse (17) et fixée sur l'arbre d'induit, c'est-à-dire
le moyeu (24) du rotor de ventilateur (4) formant la butée axiale par une extrémité dirigée vers l'une des surfaces de palier du coussinet,
**caractérisé en ce qu'**
après assemblage du moteur électrique (3) on glisse le moyeu (24, 24b, 24c) du rotor de ventilateur (4, 4b, 4c) sur l'extrémité (23, 23a) de l'arbre d'induit en laissant un intervalle par rapport à la surface de palier (18) la plus proche du coussinet (17) le plus proche, on coulisse au moins une fois l'arbre d'induit (14), on mesure la course de coulissement, et on retranche de la mesure de la course de coulissement une valeur de la grandeur (A) du jeu axial (A) souhaité et
partant d'une valeur calculée de cette manière, on commande une installation de coulissement pour coulisser le moyeu (24, 24b, 24c) sur l'extrémité (23, 23a) de l'arbre d'induit d'une course de coulissement correspondant à la valeur calculée, dans la direction de l'induit (10).

7. Procédé selon la revendication 6,
**caractérisé en ce que**
l'installation de coulissement est une presse commandée qui pousse dans la direction de l'induit (10) en s'appliquant contre la face frontale du moyeu (24, 24b, 24c) pendant que l'arbre d'induit (14) est appuyé par la face frontale.
